# EUROPEAN PATENT SPECIFICATION

(11) **EP 3 915 765 B1**
(45) Date of publication and mention of the grant of the patent: **27.09.2023**
(21) Application number: 19946421.5
(22) Date of filing: 11.11.2019
(51) Int. Cl.: B29C 64/124, B29C 64/20, B29C 64/214, B29C 64/218, B29C 64/223, B29C 64/205, B29C 64/255, B33Y 10/00, B33Y 30/00

(54) **HIGH-SPEED RESIN COATING 3D PRINTING SYSTEM**
3D-DRUCKSYSTEM FÜR HARZBESCHICHTUNG MIT HOHER GESCHWINDIGKEIT
SYSTÈME D'IMPRESSION 3D À REVÊTEMENT EN RÉSINE À GRANDE VITESSE

(30) Priority: 23.09.2019 CN 201910898700
(43) Date of publication of application: 01.12.2021
(73) Proprietor: Bmf Nano Material Technology Co., Ltd, Shenzhen, Guangdong 518000 (CN)
(72) Inventor: XIA, Chunguang, Shenzhen, Guangdong 518000 (CN)
(74) Representative: Petraz, Gilberto Luigi
(86) International application number: PCT/CN2019/117073
(87) International publication number: WO 2021/056720

(56) References cited:
- EP-A1- 3 354 442
- WO-A1-2018/226709
- CN-A- 104 908 320
- CN-A- 106 738 898
- CN-A- 108 248 020
- CN-A- 109 822 891
- CN-A- 109 822 891
- KR-A- 20190 031 888
- US-A- 5 545 367
- US-A1- 2005 248 061
- US-A1- 2013 270 746

## Description

### TECHNICAL FIELD

The present disclosure relates to the field of 3D printing, and more particularly, a high-speed resin coating 3D printing system.

### BACKGROUND TECHNIQUE

Stereolithography was originally conceived as a rapid prototyping technology. Rapid prototyping technology or 3D printing technology refers to a series of technologies that directly generate full-scale samples from computer models. They are much faster than traditional mechanical cutting. Since Chuck Hull invented 3D lithography in 1986, it has played its role economically and quickly in many fields, such as visualization of complex components, error detection of initial design, verification of the design function of important initial components, and verification of theoretical design. During the past decades, continuous improvements in the field of micro-electromechanical systems (MEMS) have led to the emergence of micro-stereolithography (µSL), which inherits basic principles from traditional stereolithography but with much high spatial resolution. The resin curing technology based on single-photon and two-photon can even reach an accuracy of 200 nanometers. However, these technologies are based on serial sequential scanning of laser spots on the resin surface or inside, which greatly affects the printing speed and cost-effectiveness. This also contributed to the emergence of projection micro-stereolithography technology. The core of this technology comes from the emergence of micro-display devices such as micro-liquid crystal displays (LCD) and Texas Instruments' digital light processor (DLP). The 3D printer images the pictures on the micro-display through a photo-mechanical image and projects them onto the photosensitive resin liquid surface for curing, and replicates the computer-generated model design through multi-layer superposition. In these 3D printing technologies that use liquid photosensitive resin as the working medium, there are three ways to define each resin layer: free surface, transparent film window, and transparent hard window. The free surface depends on the surface tension and gravity of the resin to define the resin layer. The speed is the slowest, but has the least impact on the optical accuracy; the film window uses the tensile force of the film to drive the movement of the resin, and The size of the force can be determined by the mechanical properties and stretched state of the film; the transparent hard window is actually a film with strong mechanical properties. Because it can generate a lot of pressure, the printing speed is the fastest. In high-precision 3D printing, the thickness of each layer is less than 30 microns. For a resin with a viscosity of only 10cP, it takes more than half an hour to define a 10 micron thick resin layer on a free surface of 10 mm X 10 mm, which is obviously unacceptably slow in practical applications; under the same conditions, 50 micrometers thick films generally have to wait for 2~3 minutes; Although there is no need to wait for the hard window, the movement of the sample relative to the hard window can generate a solid-liquid force sufficient to destroy the sample, which severely limits the movement speed of the sample. Under the same force, the flow speed of the liquid decreases linearly as the viscosity of the liquid increases. Therefore, for resins with a viscosity higher than hundreds of thousands of cP, or high-viscosity resins with high-component particles added, the existing 3D printing technology is obviously undesirable in the high-precision sample processing.
CN-A-109822891, corresponding to the preamble of claim 1, relates to a high-precision large-format solid projection 3D printing system and a printing method thereof. A light path projected out of a DLP optical projector is reflected and projected through a thin film light splitter to enter a projection lens, the projection lens projects the light path to the interfacial surface of a thin film and resin in a resin tank, a laser displacement meter is arranged on one side of the projection lens, an image controller is arranged on one side of the thin film light splitter, a monitoring light path of the image controller coincides with the projection light path reflected through the thin film light splitter, a sample table is located in the resin tank, the thin film is arranged in the resin tank, a mobile control system controls the resin tank, the sample table and the thin film to move, a three-dimensional geometric model is cut into a two-dimensional picture, the picture is read by a printing system in sequence and is projected to the interfacial surface of the thin film and the resin, exposure is carried out to form a curing layer, the sample table descends and is separated from the thin film, and repeated exposure is carried out in sequence; and high-precision large-format machining capacity is achieved, and he advanced precise cutting-in means is provided for the micro-machining field. This document does not disclose an electromagnetic coil provided on the projection lens, a roller arranged above the film and that such roller has a plurality of bearing coaxial cores wherein each bearing is independently rotatable.

### DETAILED DESCRIPTION

In view of the above technical problems, the present disclosure provides a high-speed resin coating 3D printing system, a new film-based coating technology, which not only solves the slow printing problem of the existing free surface and transparent film window in processing high-viscosity resin, also solves the problem of big solid-liquid force to damage the sample when using a transparent hard window. Moreover, this technical disclosure further improves the printing speed of the existing transparent film technology on low-viscosity resins.

The specific technical solutions are:
A high-speed resin coating 3D printing system, including exposure optical system, film, laser displacement meter, roller, bubble scraper, resin vat, sample stage;

The sample stage is connected with a lifting device and located in the resin vat; and the film covers on the resin in the resin vat; the resin vat is installed on the three-dimensional motion control axis; the exposure optical system is located above the resin vat, and the projection lens of the exposure optical system faces to the film, and the projection lens is covered with an electromagnetic coil for controlling the direction and size of the magnetic field during each exposure; a laser displacement meter is installed on one side of the projection lens; a roller is also set above the film, and there is a bubble scraper below the film. The laser displacement meter is used to monitor the difference between the height of a point on the upper surface of the film in the working area of the roller and the height of the film in stationary state. The roller includes a plurality of bearing coaxial cores, and each bearing rotates independently.

In accordance with embodiments, the roller includes a cylinder and two parallel rails. The rails are longitudinally arranged along the resin vat. Both ends of the central axis of the cylinder are installed on the rails and move along the rails. At least one rail is provided with a central axis driving device, which drives the roller to roll back and forth on the upper surface of the film.

In accordance with embodiments, the resin vat also includes a film clamp and a heating unit, and the heating unit is used to control the temperature of the resin.

In accordance with embodiments, the scraper includes a blade, the cross section of the blade is a smooth cylindrical surface, the roughness is less than 0.4 microns, the radius is 1.5 mm, and a length covering the largest printing area; the blade is mounted on the scraper body through a spring.

The disclosure provides a high-speed resin coating 3D printing system. Due to the introduction of the roller system, the disclosure not only provides high-speed, large-format processing capabilities, but also introduces a magnetic field to control the magnetization direction of the magnetic resin during the printing process. Therefore, this disclosure not only greatly improves the current resin-based 3D printing speed, but also allows the use of high-viscosity or high-content solid-liquid mixed resins. This technology will provide an advanced and accurate approach to the development of micro-electromechanical (MEMS) fields, biomedical fields, industrial connectors and other fields that require micro-processing.

### BRIEF DESCRIPTION OF THE DRA WINGS

Figure 1 is a schematic diagram of the structure of the device of the present disclosure;
Figure 2 is a schematic diagram of the linear movable roller structure of the present disclosure;
Figure 3 is a schematic view of the structure of the rotating roller of the present disclosure;
Figure 4 is a schematic view of the structure of the bubble scraper of the present disclosure;
Figure 5 is a cross-sectional view taken along line A-A of Figure 4 of the present disclosure;
Figure 6 is a schematic diagram of the printing steps of the present disclosure;

### DETAILED DESCRIPTION

The specific technical solutions of the present disclosure are described in conjunction with the embodiments.

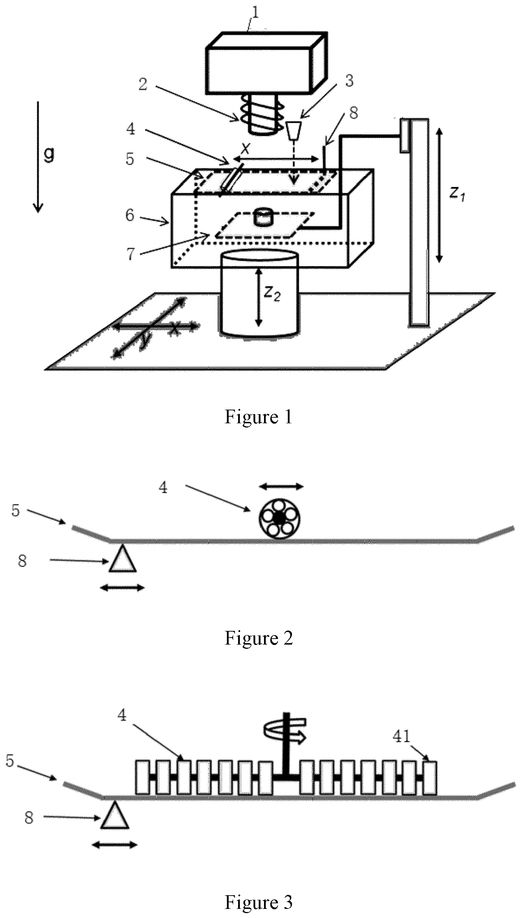

A high-speed resin coating 3D printing system as shown in Figure 1, including exposure optical system 1, film 5, laser displacement meter 3, roller 4, bubble scraper 8, resin vat 6, sample stage 7;

The sample stage 7 is connected with the lifting device, the sample stage 7 is located in the resin vat 6, and the film 5 covers on the resin in the resin vat 6; the resin vat 6 is installed on the three-dimensional motion control axis; the exposure optical system 1 is located above the resin vat 6, the projection lens of the exposure optical system 1 faces to the film 5, and the projection lens has an electromagnetic coil 2; a laser displacement meter 3 is provided on one side of the projection lens; a roller 4 is also provided above the film 5, and a bubble scraper 8 is provided below the film.

As shown in Figure 2, the roller 4 includes a cylinder and two parallel rails. The rails are longitudinally arranged along the resin vat 6, and the two ends of the central axis of the cylinder are installed on the rails and moves along, and at least one rail is provided with a central axis driving device to drive the roller to roll back and forth on the upper surface of the film.

As shown in Fig. 3, the roller 4 includes a plurality of bearings 41 with coaxial cores, and each bearing 41 rotates independently.

The resin vat 6 also includes a film clamp and a heating unit, and the heating unit is used to control the temperature of the resin.

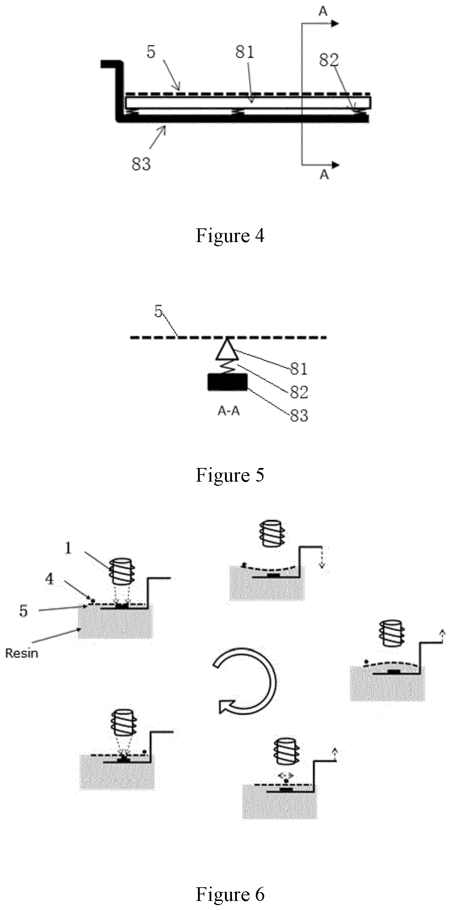

As shown schematically in Figures 4 and 5, the bubble scraper 8 includes a blade 81, the cross section of the blade 81 is a smooth cylindrical surface, the roughness is less than 0.4 microns, the radius is 1.5 mm, and the length covers the largest printing area; 81 is mounted on the scraper body 83 by a spring 82.

The curing of each layer of the image by this device can be done by laser dot scanning like SLA, it can also be a reflective liquid crystal screen LCOS or DLP of Texas Instruments in the form of surface projection. For resins with particles added, 3D molding is easier due to the relatively high power of the laser. An electromagnetic coil 2 is added above the film 5 to generate a magnetic field in a specific direction on the bottom surface of the processed film 5. According to different designs of the electromagnetic coil 2, the magnetic field can be perpendicular to the film 5 or form a certain angle with the film 5. The generated magnetic field can be used to control the magnetization direction of magnetic particles in each layer of resin, and even multiple exposures can be used to control the magnetization direction of magnetic particles in different regions of the same layer.

The use of the film 5 is mainly to: (1) use the deformation of the film 5 to reduce the force that the sample bears when moving up and down in the resin, so as to ensure the integrity of the fine structure; (2) use the strong tensile force of the film 5 to drive the resin to move along the film surface to defines the thickness of each layer of resin and reduces the printing time; (3) The film 5 is between the roller 4 and the resin to prevent the resin from directly contacting the roller 4 and causing printing failure. The film 5 is pre-stretched by 20-30%. The material of the film 5 here can be polydimethylsiloxane (PDMS), PFA or other transparent plastics, with a thickness from 25 microns to 100 microns; and a glass/quartz material film less than 100 microns thick, the surface of which is coated PFA, Teflon or other non-stick coatings with a thickness of several microns can also be used in this invention. At the same time, the laser displacement meter 3 is used to measure whether the resin stops flowing and the film 5 has returned to the set position and leveled after the film 5 moves after the sample stage 7 is moved. The invention uses Keyence's laser displacement meter, which has an accuracy of 1 micron. The laser displacement meter 3 is parallel to the optical axis of the projection lens, so the surface perpendicular to the displacement meter probe is related to the perpendicular to the optical axis. The displacement meter can also determine the verticality of the plane relative to the displacement meter through three points on the same plane but not in a line.

The roller 4 is a cylinder with precision bearings and the dimensions is precisely controlled (the size error is less than 10 microns). As shown in Figure 2, the material can be metal, plastic, or ceramic, but the roughness of the surface of the roller 4 that contacting with the film should be low to RA 0.4 micron or even lower. The central axis of the roller 4 is connected with two parallel rails. The two rails can be synchronized driving rails at the same time; or one can be driven, and the other can be a passive Gantry system. The roller 4 rolls back and forth on the upper surface (dry surface) of the film 5, and the film 5 is flattened during the rolling process. At the same time, the rotation of the bearing reduces the friction between the roller 4 and the film 5 and prolongs the service life of the film. The movement of the roller 4 can be a linear movement on the surface of the film 5 perpendicular to the direction of the roller; the roller 4 can also be a rotation on the surface of the film 5 around a point on the axis, as shown in Figure 3, in order to prevent rotation when the linear speed difference between the inside and outside of the roller 4 causes the film to be pulled and damaged, a differential speed principle is required to release the deformation of the film. As shown in Figure 3, the roller 4 is composed of a plurality of bearings 41 arranged side by side, and each bearing 41 can rotate independently, so that the bearings 41 in different positions can run at different linear speeds, and the sliding friction between the roller 4 and the film 5 is prevented.

The resin vat 6 includes a film holder and a resin container underneath, and the resin container may be equipped with a heating unit to control the temperature of the resin.

The laser displacement meter 3 is used to monitor the difference between the height of a point on the upper surface of the film in the working area of the roller and the height of the film in stationary state. When the difference is less than the set value, such as 10 microns, the film is considered to have leveled off and the roller can be stopped.

Gases will inevitably dissolve during resin preparation and printing. These gases will generate fine air bubbles due to the interaction of the movement of the resin and the film 5 during the printing process and the heat generated during the photocuring process. The air bubbles gradually combine with each other to form millimeter-level bubbles. However, these bubbles are wrapped by the film 5 at the junction of the resin and the film 5, which will cause defects in the final printed sample. Therefore, the device structure in this invention is projected from the upper part of the gravity direction onto the lower film 5, so as to make the bubbles converge under the film 5 due to buoyancy, and a specially designed bubble scraper 8 is introduced under the film 5. The blade 81 of the bubble scraper 8 is blunt and has a smooth cylindrical surface with a roughness of less than 0.4 microns, a radius of 1.5 mm, and a length that covers the largest print area. In addition, the blade 81 is supported by a spring 82 on the scraper body 83, so that the blade 81 is in elastic contact with the film 5 or the hard window during scraping, without causing damage to the surface. At the same time, the support shape of the film 5 is designed to be tilted by about 20 degrees at both ends, as shown in Figures 2 and 3, so that hen the bubbles are pushed to the tilted position by the bubble scraper 8, they stay in the tilted area due to the effect of buoyancy and will not be brought back to the printing area by the bubble scraper 8.

The device of the invention has a total of 6 motion axes. As shown in Figure 1, the two-axis control resin vat 6 and sample stage 7 move simultaneously in the XY plane, the Z1 axis that controls the height of the sample stage 7 and the Z2 axis that controls the height of the resin vat 6 and the film 5, the axis controls the bubble scraper 8 and the axis controls the roller 4. Except for the movement accuracy (0.1 mm) of the axis of the bubble scraper 8 and the axis of the control roller 4, according to the optical accuracy design of the equipment, the accuracy of other axis movement control is much higher than the optical accuracy. For example, for an optical accuracy of 10 microns, this embodiment selects an axis control accuracy of 1 micron; for an optical accuracy of 2 microns, this embodiment selects an axis control accuracy of 0.5 micron.

As shown in Fig. 6, the printing of this invention starts from the establishment of a geometric model on a computer. If there is a suspended structure during the establishment of the model, a small supporting structure, usually a thin column needs to be added. The three-dimensional geometric model will be further sliced into two-dimensional pictures in one direction, generally black and white, with grayscale. Each picture represents a thin layer in the three-dimensional model. The slicing direction of the model will be the printing direction of the printer. The series of sliced pictures will be read by the printer and projected onto the interface between the film 5 and the resin. A cured layer of certain thickness will be produced where there is light within a certain period of time, which represents the corresponding layer in the model represented by the projected picture. When the upper layer is exposed and printed, the sample stage 7 and the sample will drop by 1-4 mm or more to separate from the film 5. The descending distance is determined by the specific size of the film 5 and the adhesion of the cured resin to the film 5. When the sample stage 7 returns back, the position is right at the next layer. But due to the large sample size or the high viscosity of the resin, after the sample stage is returned, the resin fluidity between the sample stage and the film 5 is very poor, which causes the film 5 to protrude. If relying on the tension of the film 5 itself, it will take a long time for the resin in the middle of the sample to flow around to make the film 5 returns to normal. Because of the waiting time for the film 5 to flatten, the printing speed is greatly restricted. For this reason, in this invention, a roller 4 is introduced. The roller 4 is tangent to the upper surface of the film 5 in normal state. When the sample table 7 returns, the roller 4 rolls /rotates back and forth on the upper surface of the film 5 at the same time. (Speed at cm/s) , so as to quickly drive the raised film 5 to flatten. This is because when the roller 4 rolls, the resin under the convex portion of the film 5 will be squeezed by the roller 4 and flow quickly to the outer periphery. The number of times that the roller 4 rolls is determined by the feedback of the displacement meter of the film 5. When the reading of the displacement meter indicates that the film 5 has been leveled within the allowable error range, the roller 4 will stop outside the projection area. The size of the scanning area of the roller 4 can be adjusted according to the size of the printed sample. The scanning area of the small sample can be reduced accordingly, but the sample must be covered, and there must be a certain margin on the edge. When the film 5 is flattened, the gap between the sample and the film 5 is filled with the resin needed to print the next layer (Figure 5). At this time, the roller 4 should be moved out of the exposed area, and at the same time, according to the needs of the sample design, the projection lens electromagnetic coil 2 is energized to generate a certain intensity and direction of the magnetic field, and then the exposure is repeated in sequence, the model is replicated in the resin vat 6 as the sample stage 7 descends layer by layer.

## Claims

1. A high-speed resin coating 3D printing system, wherein that it includes an exposure optical system (1), a film (5), a laser displacement meter (3), a bubble scraper (8), a resin vat (6), and a sample stage (7);
wherein the sample stage (7) is connected with a lifting device and located in the resin vat (6), and the film (5) covers on the resin in the resin vat (6); the resin vat (6) is installed on a three-dimensional motion control axis; the exposure optical system (1) is located above the resin vat (6), and comprises a projection lens which faces to the film (5); one side of the projection lens is equipped with a laser displacement meter (3); the bubble scraper (8) is arranged below the film (5), **characterized in that** the projection lens has an electromagnetic coil (2), a roller (4) is arranged above the film (5), the laser displacement meter (3) being used to monitor the difference between the height of a point on the upper surface of the film (5) in the working area of the roller (4) and the height of the film (5) in stationary state, and **in that** the roller (4) includes a plurality of bearing (41) coaxial cores, and each bearing (41) rotates independently.

2. The high-speed resin coating 3D printing system according to claim 1, wherein the roller (4) includes a cylinder and two parallel rails, the rails being longitudinally arranged along the resin vat (6), and the two ends of a central shaft of the cylinder are installed on the rails and move along the rail, at least one rail being provided with a central shaft driving device to drive the roller (4) to roll back and forth on the upper surface of the film (5).

3. The high-speed resin coating 3D printing system according to claim 1, wherein the resin vat (6) further comprises a film clamp and a heating unit, and the heating unit is used to control the temperature of the resin.

4. The high-speed resin coating 3D printing system according to any one of claims 1 to 3, wherein the bubble scraper (8) comprises a blade (81), the cross section of the blade (81) is a smooth cylindrical surface with a roughness of less than 0.4 micron, with a radius of 1.5 mm and a length covering the largest printing area; the blade (81) is mounted on a scraper body (83) through a spring (82).

## Patentansprüche

1. 3D-Drucksystem für Harzbeschichtung mit hoher Geschwindigkeit, worin es ein belichtungsoptisches System (1), einen Film (5), einen Laserverschiebungsmesser (3), einen Blasenschaber (8), ein Harzgefäß (6) und einen Mustertisch (7) umfasst;
worin der Mustertisch (7) mit einer Hebevorrichtung verbunden ist und im Harzgefäß (6) angeordnet ist, und der Film (5) bedeckt das Harz im Harzgefäß (6); das Harzgefäß (6) an einer dreidimensionalen Bewegungssteuerungsachse installiert ist; das belichtungsoptische System (1) über dem Harzgefäß (6) angeordnet ist und eine Projektionslinse umfasst, die dem Film (5) gegenüberliegt; eine Seite der Projektionslinse mit einem Laserverschiebungsmesser (3) ausgestattet ist; der Blasenschaber (8) unter dem Film (5) angeordnet ist, **dadurch gekennzeichnet, dass** die Projektionslinse eine elektromagnetische Spule (2) hat, eine Rolle (4) über dem Film (5) angeordnet ist, der Laserverschiebungsmesser (3) verwendet wird, um den Unterschied zwischen der Höhe eines Punktes an der oberen Fläche des Filmes (5) im Arbeitsbereich der Rolle (4) und der Höhe des Filmes (5) im stationären Zustand zu überprüfen, und dass die Rolle (4) eine Vielzahl von koaxialen Kernen von Lagern (41) umfasst, und jedes Lager (41) unabhängig rotiert.

2. 3D-Drucksystem für Harzbeschichtung mit hoher Geschwindigkeit nach Anspruch 1, worin die Rolle (4) einen Zylinder und zwei parallele Schienen umfasst, wobei die Schienen der Länge nach entlang des Harzgefäßes (6) angeordnet sind, und die zwei Enden einer zentralen Welle des Zylinders an den Schienen installiert sind und sich entlang der Schiene bewegen, wobei zumindest eine Schiene mit einer zentralen Wellenantriebsvorrichtung versehen ist, um die Rolle (4) anzutreiben, damit diese vorwärts und rückwärts an der oberen Fläche des Filmes (5) rollt.

3. 3D-Drucksystem für Harzbeschichtung mit hoher Geschwindigkeit nach Anspruch 1, worin das Harzgefäß (6) ferner eine Filmklemme und eine Heizeinheit umfasst, und die Heizeinheit verwendet wird, um die Temperatur des Harzes zu steuern.

4. 3D-Drucksystem für Harzbeschichtung mit hoher Geschwindigkeit nach einem der Ansprüche 1 bis 3, worin der Blasenschaber (8) ein Blatt (81) umfasst, der Querschnitt des Blattes (81) eine glatte zylinderförmige Fläche mit einer Rauheit von weniger als 0,4 Mikron ist, mit einem Radius von 1,5 mm und einer Länge, die den größten Druckbereich deckt; das Blatt (81) an einem Schaberkörper (83) über eine Feder (82) montiert ist.

## Revendications

1. Système d'impression 3D à revêtement de résine à grande vitesse, dans lequel il comprend un système optique d'exposition (1), un film (5), un compteur de déplacement laser (3), un racleur à bulles (8), un bac à résine (6) et un étage d'échantillon (7) ;
dans lequel l'étage d'échantillon (7) est relié à un dispositif de levage et situé dans le bac à résine (6), et le film (5) recouvre la résine dans le bac à résine (6) ; le bac à résine (6) est installée sur un axe de contrôle de mouvement tridimensionnel ; le système optique d'exposition (1) est situé au-dessus du bac à résine (6), et comprend une lentille de projection qui fait face au film (5) ; un côté de la lentille de projection est équipé d'un compteur de déplacement laser (3) ; le racleur à bulles (8) est disposé sous le film (5), **caractérisé en ce que** la lentille de projection a une bobine électromagnétique (2), un rouleau (4) est disposé au-dessus du film (5), le compteur de déplacement laser (3) étant utilisé pour surveiller la différence entre la hauteur d'un point sur la surface supérieure du film (5) dans la zone de travail du rouleau (4) et la hauteur du film (5) à l'état stationnaire, et **en ce que** le rouleau (4) comprend une pluralité de noyaux coaxiaux de palier (41), et chaque palier (41) tourne indépendamment.

2. Système d'impression 3D à revêtement de résine à grande vitesse selon la revendication 1, dans lequel le rouleau (4) comprend un cylindre et deux rails parallèles, les rails étant disposés longitudinalement le long du bac à résine (6), et les deux extrémités d'un arbre central du cylindre sont installées sur les rails et se déplacent le long du rail, au moins un rail étant pourvu d'un dispositif d'entraînement d'arbre central pour entraîner le rouleau (4) à rouler en avant et en arrière sur la surface supérieure du film (5).

3. Système d'impression 3D à revêtement de résine à grande vitesse selon la revendication 1, dans lequel le bac à résine (6) comprend en outre une pince à film et une unité de chauffage, et l'unité de chauffage est utilisée pour contrôler la température de la résine.

4. Système d'impression 3D à revêtement de résine à grande vitesse selon l'une quelconque des revendications 1 à 3, dans lequel le racleur de bulles (8) comprend une lame (81), la section transversale de la lame (81) est une surface cylindrique lisse avec une rugosité inférieure à 0,4 micron, avec un rayon de 1,5 mm et une longueur couvrant la plus grande surface d'impression ; la lame (81) est montée sur un corps de racleur (83) par l'intermédiaire d'un ressort (82).
